(19) Europäisches Patentamt
European Patent Office
Office européen des brevets

(11) EP 1 727 074 A2

(12) EUROPEAN PATENT APPLICATION

(43) Date of publication:
29.11.2006 Bulletin 2006/48

(51) Int Cl.:
G06K 9/68 (2006.01)     G06K 9/62 (2006.01)

(21) Application number: 06010953.5

(22) Date of filing: 26.05.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 26.05.2005  JP 2005154001

(71) Applicant: KABUSHIKI KAISHA TOSHIBA
Tokyo 105-8001 (JP)

(72) Inventor: Sukegawa, Hiroshi
c/o Toshiba Corporation
Tokyo 105-8001 (JP)

(74) Representative: HOFFMANN EITLE
Patent- und Rechtsanwälte
Arabellastrasse 4
81925 München (DE)

(54) **Person searching device, person searching method and access control system**

(57)     A person searching device (1) stores beforehand, as history information, biometric information and a person searching result with respect to the biometric information, and judges with respect to each history information whether or not the biometric information of a searching object and the biometric information of the history information are of the same person. The person searching device (1) judges the person searching result with respect to the searching object based on the searching result in the history information of the biometric information judged to be of the same person as that of the biometric information of the searching object, in a case where there exists the history information of the biometric information judged to be of the same person as that of the biometric information of the searching object.

F I G. 1

## Description

The present invention relates to a person searching device, a person searching method and an access control system in which a person similar to an object is searched based on biometric information such as iris, retina, vein, facial features and hand geometry of the object.

In recent years, there has been developed a technology to search for a person who is similar to a person to be searched based on biometric information such as iris, retina, vein, facial features and hand geometry of the object. In the technology to search for the person by such biometric information, there is judged similarity between the biometric information acquired from the object and biometric information of a plurality of registrants registered beforehand, and the registrant who is similar to object is searched based on the,similarity. Furthermore, the above technology is applied to a system to manage person's access based on the similarity.

For example, in Jpn. Pat. Appln. KOKAI Publication No. 2002-163652, there is described a technology in which the similarity between the biometric information (registered data) of the registrants is generally obtained beforehand, and there is controlled, based on the similarity between the registered data, an order of performing processing (collation processing) to calculate the similarity of each registered data with respect to the biometric information of the object.

Moreover, in Jpn. Pat. Appln. KOKAI Publication No. 2003-256380, a technology is described which controls the order of processing (collation processing) to calculate the similarity of each registered data with respect to the object's biometric information based on a processing history with respect to the person specified by specific information such as the ID number and name.

In one aspect of this invention, an object is to improve efficiency or precision in searching for a person by biometric information.

A person searching device as one aspect of this invention has: a registration unit in which biometric information of a plurality of persons is registered beforehand; a biometric information obtain unit which acquires the biometric information of a person to be searched; a history storage unit which associates the biometric information acquired by the biometric information obtain unit with a person searching result based on the biometric information to store the associated information; a first searching unit which searches the history storage unit for biometric information similar to the biometric information acquired by the biometric information obtain unit; a second searching unit to search for the biometric information which is similar to the biometric information acquired by the biometric information obtain unit and which is registered in the registration unit, by use of a searching result obtained by the first searching unit; and an output unit which outputs a searching result obtained by the second searching unit as the person searching result with respect to the person to be searched.

A person searching method as one aspect of this invention includes: registering biometric information of a plurality of persons beforehand in a registration unit; acquiring the biometric information of a person to be searched; associating the acquired biometric information with a person searching result based on the biometric information to store the associated information in a history storage unit; searching the history storage unit for biometric information similar to the biometric information acquired from the person to be searched; searching for the biometric information which is similar to the acquired biometric information and which is registered in the registration unit, by use of a searching result from the history storage unit; and outputting a searching result from the registration unit as the person searching result with respect to the person to be searched.

An access control system as one aspect of this invention has: a registration unit in which there is registered beforehand biometric information of a plurality of persons permitted to come in and out; a biometric information obtain unit which acquires the biometric information of a person to be searched; a history storage unit which associates the biometric information acquired by the biometric information obtain unit with a person searching result based on the biometric information to store the associated information; a first searching unit which searches the history storage unit for biometric information similar to the biometric information acquired by the biometric information obtain unit; a second searching unit to search for the biometric information which is similar to the biometric information acquired by the biometric information obtain unit and which is registered in the registration unit, by use of a searching result obtained by the first searching unit; an output unit which outputs a searching result obtained by the second searching unit as the person searching result with respect to the person to be searched; and an external device which controls access of the person to be searched based on the person searching result output from the output unit.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a block diagram schematically showing a constitution of a person searching device in an embodiment;
FIG. 2 is an explanatory view of history information to be stored in a history management unit;
FIG. 3 is an explanatory view of general processing with respect to a plurality of searching results;

FIG. 4 is a flowchart showing a flow of processing in the person searching device;

FIG. 5 is a block diagram schematically showing a constitution of a person searching device in a first application example;

FIG. 6 is a block diagram schematically showing a constitution of a person searching device in a second application example;

FIG. 7 is a diagram showing examples of history information and ways to thin correlation;

FIG. 8 is an explanatory view of a correlation between person to be searched persons;

FIG. 9 is a block diagram schematically showing a constitution of a person searching device in a third application example;

FIG. 10 is an explanatory view showing a relation between threshold values to be set; and

FIG. 11 is a flowchart showing a processing example in a case where processing is performed to search again for a face image of history information and a face image of registered information.

There will be described hereinafter an embodiment of the present invention with reference to the drawings.

In the following embodiment, there will be described a person searching device which searches for a person by a face image as biometric information. In a technology described in the present embodiment, the biometric information is not limited to the face image. The technology described as the present embodiment is applicable to a device or a method which searches for the person by various biometric information. Biometric information such as iris, retina, hand or finger vein patterns, fingerprint patterns, and eye, ear and mouth states is applicable as the biometric information of the present embodiment.

Moreover, in the present embodiment, it is assumed that persons to be searched are mainly a large number of persons (registrants). The present embodiment is applied to, for example, an access control system in which several thousands to tens of thousands of persons are registrants or an access control system which allows a large number of persons to enter and exit in a short period. It is assumed that the former operation mode is applied to the access control system to manage those who enter and leave a building or company premises. It is also assumed that the latter operation mode is applied to the access control system which manages access with respect to an event hall, an amusement park or the like where a large number of persons come in and out in a short period. It is considered that the present embodiment is largely effective in an operation mode in which the specific number of persons repeatedly become persons to be searched among a plurality of registrants.

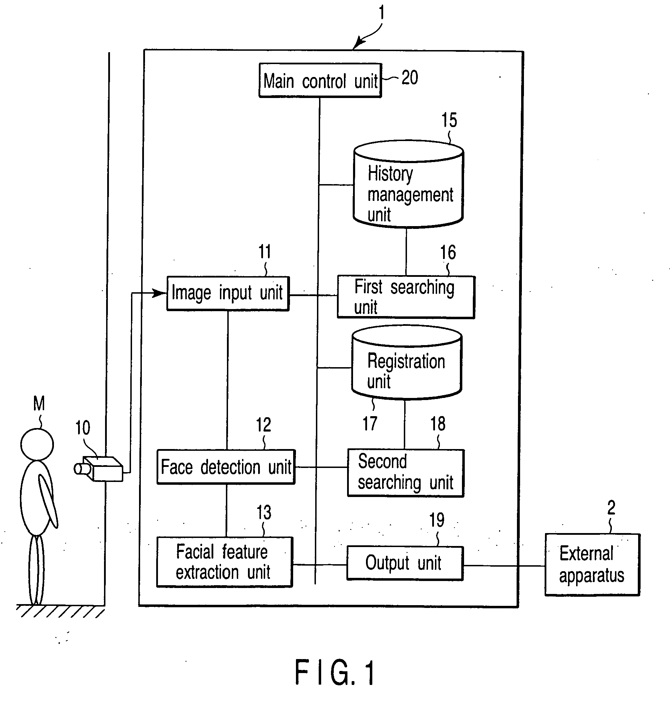

FIG. 1 is a block diagram schematically showing a constitution example of a person searching device 1 in the present embodiment.

This person searching device 1 is constituted of: a camera 10; an image input unit 11; a face detection unit 12; a facial feature extraction unit 13; a history management unit 15; an first searching (advance searching) unit 16; a registration unit 17; a second searching (final searching) unit 18; an output unit 19; a main control unit 20 and the like.

The above person searching device 1 is realized by a computer (not shown) connected to the camera 10. In this case, the image input unit 11 and the output unit 19 are realized by an input and output interface in the computer. The face detection unit 12, the facial feature extraction unit 13, the first searching unit 16, the second searching unit 18 and the main control unit 20 are functions realized when a control unit (not shown) in the computer executes a processing program stored in a memory (not shown). The history management unit 15 and the registration unit 17 are realized by various memories (not shown) accessible by the control unit (not shown) in the computer. It is to be noted that the camera 10, the image input unit 11, the face detection unit 12 and the facial feature extraction unit 13 function as a biometric information obtain unit.

The camera 10 photographs a face image (an image including at least a face) of a person to be searched (hereinafter referred to as a person or an entering and exiting person) M. The camera 10 functions as an image obtain unit which inputs the face image. The camera 10 is constituted of a television camera or the like using an image sensor such as a CCD sensor. It is to be noted that in the present embodiment, there will be described the person searching device 1 in which the camera 10 constituted of the television camera is used as the image obtain unit. In the person searching device 1, a scanner to read and input the face image of a photograph may be applied as the camera 10 which is the image obtain unit.

The image input unit 11 functions as an image obtain unit which is combined with the camera 10 to acquire an image including biometric information. The image input unit 11 shown in FIG. 1 processes the image picked up by the camera 10. The image input unit 11 converts, for example, image data including an analog signal photographed by the camera 10 into image data including a digital signal. The image data digitized by the image input unit 11 is supplied to the face detection unit 12.

The face detection unit 12 functions as a biometric information detection unit which detects the biometric information. The face detection unit 12 shown in FIG. 1 has a function of detecting a region of a person's face in the image data, and a function of detecting each part of the person's face, such as eyes, nose and mouth. These functions are realized by the processing program executed by a processing unit such as a CPU of the computer.

3

That is, the face detection unit 12 detects the face region of the object M from the image data supplied from the image input unit 11. As a technology to detect the face region, there is applied, to the face detection unit 12, for example, a method of detecting the face region based on a correlation value with a template prepared beforehand. In such technology to detect the face region, a region in an image, indicating a the highest correlation value with respect to a template prepared beforehand, is regarded as the face region. That is, in the face detection unit 12 in which this technology is adopted, the template is moved in the image supplied from the image input unit 11, a correlation value with respect to each region in the image is obtained, and the region in the input image, which indicates the highest correlation value, is regarded as the face region. It is to be noted that as a technology to detect the face region, there may be performed a technology to extract the face region by use of an inherent space method or a subspace method or the like.

Moreover, the face detection unit 12 detects parts forming the face, such as eyes, nose and mouth, from the detected image of the face region. For example, as a method in which the face detection unit 12 detects each face part, a method is applicable which is disclosed in, for example, a document (Kazuhiro FUKUI and Osamu YAMAGUCHI: "Facial feature point extraction method based on combination of shape extraction and pattern matching", Journal (D) of the Institute of Electronic Information and Communication Engineers, vol. J80-D-II, No. 8, pp. 2170 to 2177 (1997)). As a method of detecting a region of the mouth, a technology is applicable which is described in a document (Mayumi YUASA and Rouko NAKASHIMA: "Digital Make-up System based on precise facial feature point detection" the 10th Image Sensing Symposium Digests, pp. 219 to 224 (2004)).

Furthermore, a known technology is applicable to processing to detect biometric information from the image including the biometric information. For example, to the processing to detect the fingerprint or vein pattern as the biometric information, a technology is applicable which is described in, for example, a document (Optoelectronic Industry and Technology Development Association (http://www.oitda.or.jp/index-j.html): 2003 Optoelectronic Industry Trend Research "15-003-1 Optoelectronic Industry Trend Research Report", Chapter 5 "Human Interface" (2003)).

The facial feature extraction unit 13 functions as a characteristic extraction unit which extracts characteristic information of the biometric information. The facial feature extraction unit 13 extracts facial feature information from the image of the face region detected by the face detection unit 12. As the facial feature information (characteristic information of the biometric information), there is used, for example, concentration difference information in a region cut out into predetermined size and shape. In this case, the facial feature extraction unit 13 cuts out the face region into the predetermined size and shape based on a position of the face part detected by the face detection unit 12. The facial feature extraction unit 13 extracts, as a characteristic amount (facial feature information) of the face image, the concentration difference information in the image of the region cut out into the predetermined size and shape.

Moreover, the facial feature extraction unit 13 extracts, as the characteristic amount (facial feature information) of the face image, a concentration difference value in the face image region of $m$ pixels x $n$ pixels. In this case, $m$ x $n$-dimensional concentration difference information as the characteristic amount of the face image is given as a characteristic vector. The characteristic vector indicating such characteristic amount of the face image is normalized by a method referred to as a simple similarity method so that each of a vector and a vector length is set to "1". When an inner product of the normalized characteristic vector and another characteristic vector is calculated, a similarity degree indicating similarity between the characteristic vectors is calculated. This calculation result indicates the similarity degree between the characteristic amounts of two face images indicated by the characteristic vectors. That is, when the similarity degree as the calculation result is "1", completely the same image is indicated. It is indicated that as the value comes close to "0", the similarity degree is low. Such method of judging the similarity degree by use of the characteristic vector is utilized in person search processing in the first searching unit 16 or the second searching unit 18.

In the history management unit 15, there is stored history information indicating contents of the person search processing performed in the past. The history management unit 15 is constituted of a storage device such as a hard disk drive and the like. For example, the history information to be stored in the history management unit 15 is data associated with the face image as the person to be searched (or the facial feature information obtained from the face image), searching results of the person search processing and the like. Examples of the history information to be stored in the history management unit 15 include the face image (input image) as the person to be searched, the searching results (e.g., a plurality of pieces of registered information arranged in order from the highest similarity degree, and the similarity degrees), and attribute information (searching date, searching conditions). Examples of the searching result include a plurality of pieces of registered information arranged in order from the highest similarity degree and the similarity degrees. The attribute information includes the date (searching date) when the search processing was performed, the searching conditions, a searching order and the like. The searching result may be information to be linked with the registered information registered in the registration unit 17, such as personal identification information of the registrant.

Moreover, in the history management unit 15, there is successively stored the history information indicating the contents of the person search processing performed in the past. Therefore, in a case where there is a restriction on a storage capacity of the history management unit 15, the history information stored in the history management unit 15 is successively deleted in accordance with a predetermined rule. For example, in a case where the amount of the data stored in the history management unit 15 reaches a certain capacity, the history management unit 15 may successively delete the oldest history information.

The history management unit 15 may successively delete the history information having the smallest ratio (hit ratio) at which first search processing described later judges similarity.

Furthermore, the history management unit 15 may store the history information so that the searching order is an order from the highest hit ratio in the first search processing described later. For example, when processing such as clustering is performed, the history management unit 15 may put together the history information every pieces of history information of the same person or every pieces of history information of similar face images. When the history information stored in the history management unit 15 is arranged in this manner, it is possible to improve a processing efficiency (searching efficiency) of the first search processing by the first searching unit 16 described later.

The first searching unit 16 performs processing (hereinafter referred to as the first search processing) to search the history management unit 15 for the history information of the face image (or the facial feature information) which is similar to the face image (or the facial feature information) of the person to be searched. The result of the first search processing performed by the first searching unit 16 is output to the second searching unit 18.

It is to be noted that in the present embodiment, when the images are "similar", it is meant that it is judged that images "seem to be the same person". Moreover, it is judged whether or not the images are "similar (seem to be the same person)" by judging whether or not the similarity degree between the face image (or the facial feature information) of the person to be searched and the face image (or the facial feature information) of the history information is not less than a predetermined threshold value. The threshold value is a standard value for judging whether or not the images are "similar (seem to be the same person)". The threshold value is appropriately set in accordance with the operation mode of the person searching device.

In the first search processing by the first searching unit 16, processing is first performed to judge the similarity degree between the face image (or the facial feature information) of the person to be searched and each history information input image (or the facial feature information) stored in the history management unit 15.

Here, it is assumed that the facial feature information is one m x n-dimensional characteristic vector. It is also assumed that the facial feature information is stored as the input image of the history information in the history management unit 15. In this case, the facial feature information in the face image photographed by the camera 10 is calculated by the facial feature extraction unit 13. The first searching unit 16 calculates the similarity degree between the characteristic vector as the facial feature information of searching person's face calculated by the facial feature extraction unit 13 and the characteristic vector as the facial feature information of each history information input image stored in the history management unit 15. Accordingly, the first searching unit 16 calculates the similarity degree between the searching person's face image and each history information input image.

Moreover, in a case where there is not any input image history information as the similarity degree which is not less than the predetermined threshold value among the similarity degrees calculated by the above processing. the first searching unit 16 judges that there does not exist any input image of the history information that is similar to the face image of the person to be searched. In this case, the first searching unit 16 judges, as the result of the first search processing, that there is not any history information of the input image similar to the face image of the person to be searched. In a case where there exists the input image history information indicating the similarity degree which is not less than the predetermined threshold value, the first searching unit 16 regards, as the result of the first search processing, the history information of the input image which is similar to the face image of the person to be searched.

Furthermore, in a case where there is only one piece of history information of the input image indicating the similarity degree which is not less than the predetermined threshold value, the first searching unit 16 regards the history information of the input image similar to the searching person's face image as the result of the first search processing. In a case where there exist a plurality of pieces of history information of the input image indicating the similarity degree which is not less than the predetermined threshold value, the first searching unit 16 regards all pieces of the history information of the input image similar to the searching person's face image as the result of the first search processing. It is to be noted that in a case where there exist a plurality of pieces of history information of the input image indicating the similarity degree which is not less than the predetermined threshold value, the first searching unit 16 may regard, as the result of the first search processing, the history information of the input image indicating the maximum similarity degree with respect to the searching person's face image among a plurality of pieces of history information of the input image similar to the searching person's face image.

In the registration unit 17, the registered information on each registrant is stored (registered) beforehand. Each piece of registered information stored in the registration unit 17 includes at least the face image of the registrant or the facial feature information obtained from the registrant's face image. As the facial feature information included in each piece of registered information to be stored in the registration unit 17, there is used, for example, the above m x n-dimensional characteristic vector. The facial feature information included in each piece of registered information stored in the registration unit 17 may be a subspace or a correlation matrix immediately before KL expansion is performed. Furthermore, the registered information registered in the registration unit 17 also includes, for example, personal identification information (ID number) given to the registrant. In consequence, the registered information to be registered in the registration unit 17 can be searched based on the personal identification information.

Moreover, in the registration unit 17, one piece of registered information may be stored with respect to one registrant, and a plurality of pieces of registered information may be stored with respect to one registrant. In one piece of registered information to be stored in the registration unit 17, a plurality of face images or a plurality of pieces of facial feature information may be stored.

The second searching unit 18 judges a final person searching result as the person searching device 1 by use of the result of the first search processing of the first searching unit 16. The second searching unit 18 has a function of performing processing (hereinafter referred to as the second search processing) to search the registration unit 17 for the registered information of the face image (or the facial feature information) of the face image similar to the searching person's face image (or the facial feature information), a function of preparing the person searching result based on the first search processing result obtained by the first searching unit 16 and the like.

The second search processing of the second searching unit 18 is processing to search for the registered information of the face image (or the facial feature information) similar to the face image (or the facial feature information) of the person to be searched M. That is, the second search processing judges the similarity degree between the face image of the person to be searched M and each registered information face image. When there is calculated the similarity degree of each piece of registered information with respect to the face image of the person to be searched M, the second search processing obtains, as a result of the second search processing, the predetermined number of pieces of registered information from an upper rank among a plurality of pieces of registered information arranged in order from the information indicating the highest similarity degree. The second search processing may obtain.the similarity degree which is not less than the pre threshold value as the result of the second search processing.

It is to be noted that it is judged in accordance with the operation mode of the person searching device 1 whether the predetermined number of pieces of registered information having high similarity degrees are obtained as the searching result or the registered information indicating the similarity degree which is not less than the predetermined threshold value is obtained as the searching result.

For example, in a case where the person searching device 1 is applied to a person monitor system (i.e., the person searching result obtained by the person searching device 1 is used as information for monitoring the person), it is considered that it is important to obtain information on the person similar to the person to be searched M as the final person searching result obtained by the person searching device 1. Therefore, in a case where the person searching device 1 is applied to the person monitor system, the above second search processing regards the predetermined number of pieces of registered information having high similarity degrees as the searching result.

Moreover, in a case where the person searching device 1 is applied to an access control system (i.e., in a case where the person searching result obtained by the person searching device 1 is used as information for controlling access), it is considered that a judgment result indicating whether or not the person to be searched M is the registrant is important as the final person searching result obtained by the person searching device 1. Therefore, in a case where the person searching device 1 is applied to the access control system, the second search processing obtains, as the result of the second search processing, the registered information indicating the similarity degree which is not less than the predetermined threshold value.

Furthermore, the second searching unit 18 judges the person searching result by use of the first search processing result obtained by the first searching unit 16. For example, in a case where the first search processing of the first searching unit 16 judges that there exists only one piece of history information of the input image indicating the similarity degree which is not less than the predetermined threshold value with respect to the searching person's face image, the second searching unit 18 obtains the searching result in the history information as the final person searching result with respect to the person to be searched M without performing any second search processing.

In addition, in a case where the first search processing of the first searching unit 16 judges that there exist a plurality of pieces of history information of the input image indicating the similarity degree which is not less than the predetermined threshold value with respect to the searching person's face image, the second searching unit 18 judges the final person searching result with respect to the person to be searched based on the searching result in the history information.

For example, the second searching unit 18 may prepare one searching result from a plurality of searching results of the history information obtained by the first search processing. In this case, the second searching unit 18 performs integration processing to integrate the history information searching results (a plurality of searching results), and one searching result (integrated searching result) obtained by this integration processing is obtained as the final person searching result.

In consequence, the second searching unit 18 obtains the final person searching result without performing any second search processing (i.e., without performing processing to judge the similarity degrees with respect to all pieces of registered information). Therefore, it is possible to reduce a processing time required for the whole person search processing in the person searching device 1. It is to be noted that the integration processing will be described later in detail.

Moreover, the second searching unit 18 may regard, as the person to be searched, only registrant's registered information limited based on a plurality of history information searching results obtained by the first search processing, and search the face image of the person to be searched M. In this case, the second searching unit 18 focuses on the registrant as the person to be searched based on the plurality of history information searching results obtained by the above first search processing, regards the registered information of the limited registrant as the person to be searched, and searches the face image of the person to be searched M.

In consequence, the second searching unit 18 can obtain the final person searching result by the processing to judge the similarity degree with respect to the limited registered information without judging the similarity degrees with respect to all pieces of registered information. Therefore, it is possible to reduce the processing time required for the whole person search processing in the person searching device 1.

The output unit 19 outputs, to an external device 2, the final person searching result of the person searching device 1 or a control signal in accordance with the final person searching result. A constitution of the output unit 19 and information to be output by the output unit 19 is designed in accordance with a constitution or an operation mode of the external device 2.

For example, in a case where the person searching device 1 is applied to the person monitor system, the external device 2 is constituted of a display unit or the like for an observer or the like to monitor persons. In this case, the output unit 19 outputs the face image of the person to be searched M photographed by the camera 10, the final person searching result obtained by the second searching unit 18 and the like. Especially when the display unit displays information to be monitored by the external device 2, the output unit 19 outputs display data such as the face image of the person to be searched M photographed by the camera 10, registered information (registrant's face image and registrant's attribute information) based on the person searching result and the similarity degree.

Moreover, in a case where the person searching device 1 is applied to the person monitor system in which an object is to monitor a specific person set beforehand by the person searching device 1, the external device 2 is constituted of a display unit, an alarm unit and the like for notifying the observer that the specific person has been found. In this case, when the person searching result includes the specific person indicating the similarity degree that is not less than the predetermined threshold value, the output unit 19 outputs, to the external device 2, a control signal for displaying a warning indicating that the specific person has been detected or sounding an alarm.

Furthermore, in a case where the person searching device 1 is applied to the access control system in which passing of the person is controlled by opening and closing a door, the external device 2 is constituted of a device to control the opening and closing of the door (or a key disposed in the door) for controlling the person's passing. In this case, when the person searching result includes the registrant (or the registrant permitted to pass) indicating the similarity degree that is not less than the predetermined value, the output unit 19 outputs to the external device 2 a control signal for opening the door (or unlocking the key disposed in the door).

The main control unit 20 performs a general control of the whole person searching device 1. The main control unit 20 controls an operation of each component and the like.

For example, the main control unit 20 may selectively switch whether to execute or omit the first search processing. When the person searching device 1 of the present embodiment performs processing (first search processing) to search the history management unit 15 for the history information of the input image similar to the face image of the person to be searched M, efficiency or precision of the processing can be improved.

However, when the above first search processing is performed, the efficiency of the processing might drop in accordance with the operation mode. For example, in a case where the number of the pieces of the history information becomes larger than that of the pieces of the registered information, a time required for the first search processing might be longer than that required form the second search processing. In a case where a ratio (hit ratio) at which the similar history information is found in the first search processing is excessively low, when the first search processing is executed, the efficiency of the whole processing might drop. Therefore, the main control unit 20 stores beforehand, in an inner memory (not shown), information such as an average value of the processing time required for the first search processing, an average value of the processing time required for the second search processing and the hit ratio in the first search processing. Based on the information, the main control unit 20 judges whether to execute or omit the first search processing.

For example, in a case where the average value of the processing time required for the first search processing is longer than that of the processing time required for the second search processing, the main control unit 20 judges that the first search processing be omitted. When the hit ratio in the first search processing is lower than a predetermined value, the main control unit 20 judges that the first search processing be omitted.

When the above control is performed, the main control unit 20 can dynamically switch whether or not to perform the first search processing, and execute a control so that the efficiency of the whole processing does not drop with respect to any operation mode.

Moreover, the main control unit 20 may appropriately change a threshold value for judging that the image "is similar (seems to be the same person)" in the above first search processing or the above second search processing.

For example, in a case where the present person searching device 1 is applied to the person monitor system, the main control unit 20 appropriately changes the threshold value for judging that the image "is similar (seems to be the same person)" in accordance with an operation situation or the like in the first search processing or the second search processing. For example, in the person monitor system, there might be a situation in which the monitoring be intensified in a specific period. In such case, when the threshold value is changed in accordance with the operation situation as described above, appropriate monitoring of the person can be realized in accordance with the situation.

Next, there will be described the first search processing to be performed by the first searching unit 16.

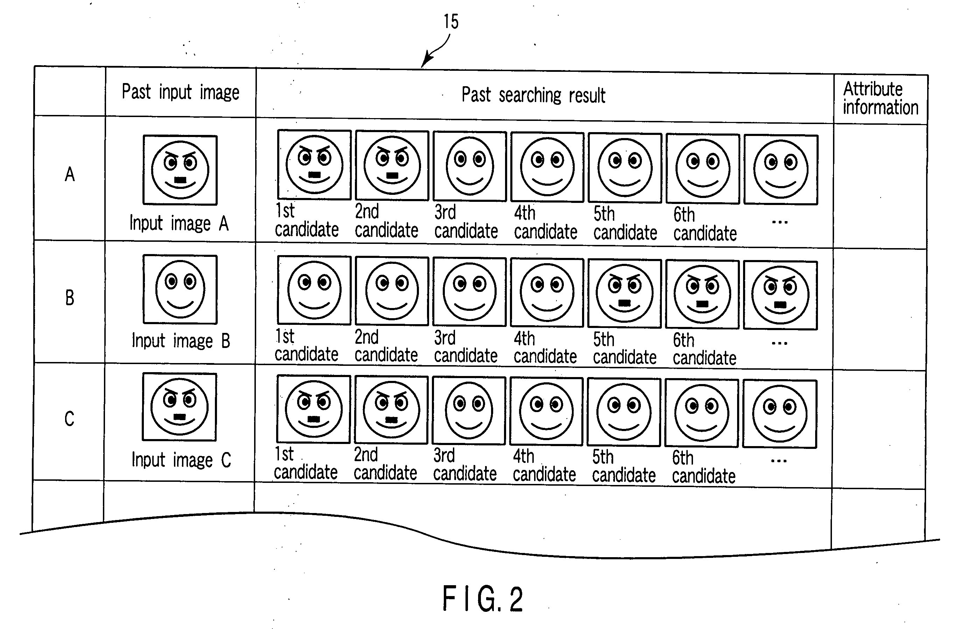

FIG. 2 is a diagram showing an example of the history information to be stored in the history management unit 15.

As shown in FIG. 2, in the history management unit 15, as the history information, there are stored searching results of one searching person's face image (input image) and attribute information such as a searching date. The above history information searching result indicates the result of the person search processing (the first search processing or the second search processing) with respect to the history information input image. In the example shown in FIG. 2, the searching result is constituted of information indicating the predetermined number of pieces of registered information having high similarity degrees with respect to the input image. The information indicating the registered information in the searching result is information such as personal identification information indicating the registrant, the face image (or the facial feature information) of the registrant and the similarity degree with respect to the input image. It is to be noted that the personal identification information indicating the registrant and the registrant's face image (or the facial feature information) are stored as the registered information in the registration unit 17.

As a typical example, there will be described the first search processing with respect to three pieces of history information shown in FIG. 2. Here, assuming that the searching person's face image photographed by the camera 10 is a face image X, the first searching unit 16 calculates similarity degrees of an input image A of history information A with respect to the face image X, an input image B of history information B and an input image C of history information C, respectively. When the similarity degree of each history information input image is calculated with respect to the searching person's face image X, the first searching unit 16 obtains, as the searching result of the first search processing, the history information of the input image indicating the similarity degree that is not less than the predetermined threshold value.

That is, the first searching unit 16 judges that the input image of the history information indicating the similarity degree which is not less than the predetermined threshold value is the same person as the person to be searched. This indicates that the person to be searched has ever been searched. Therefore, as the person searching result obtained by the face image of the person to be searched, the past searching result with respect to the person can be used. According to such first search processing in the person searching device 1, even unless the searching person's face image X is collated with all pieces of registered information registered in the registration unit 17, it is possible to obtain the person searching result with respect to the face image of the person to be searched.

Moreover, in a case where there exist a plurality of pieces of history information of the input image indicating the similarity degree which is not less than the predetermined threshold value, the first searching unit 16 may regard all pieces of the history information of the input image as the result of the first search processing, or regard one of the pieces of the history information as the result of the first search processing. It is to be noted that the second searching unit 18 may select one of the plurality of pieces of history information. In this case, the first searching unit 16 supplies to the second searching unit 18 all of the pieces of history information indicating the similarity degree which is not less than the predetermined threshold value as the result of the first search processing.

Furthermore, in a case where there exist a plurality of pieces of history information of the input image indicating the similarity degree which is not less than the predetermined threshold value, the first searching unit 16 may obtain one piece of history information having the highest similarity degree as the searching result, the latest piece of history information as the searching result, or the oldest piece of history information as the searching result among the input image history information indicating the similarity which is not less than the predetermined threshold value.

Here, the latest history information indicates information in a case where the person to be searched has previously been detected. That is, when the latest history information is obtained as the searching result, there is a merit that it is possible to obtain information (e.g., searching date, searching candidate, etc.) on the previous person search processing with respect to the person to be searched together with the person searching result with respect to the person to be searched The input image of the latest history information is the face image most recently photographed in the history information with respect to the person. Therefore, when the searching person's face image is visually compared with the input image of the latest history information, the recent face change of the person to be searched can be indicated.

In addition, the input image of the oldest history information is the face image photographed at a time closest to that of the face image received in the registration unit 17 in the history information of the person. It is usually predicted that the person's face changes with an elapse of time. Therefore, it is presumed that the input image of the oldest history information has the highest similarity degree with respect to the face image registered in the registration unit 17. In other words, when the oldest history information is used as the searching result, there is a merit that the result of the first search processing can indicate the person searching result with respect to the person to be searched as well as the searching result (history information) of the person search processing performed with respect to the face image having a state closest to that of the face image registered in the registration unit 17.

Next, there will be described a processing example of the second searching unit 18 in a case where a plurality of pieces of history information are obtained as the result of the first search processing performed by the first searching unit 16.

That is, in a case where the above first search processing obtains a plurality of pieces of history information of the face image similar to that of the person to be searched, the second searching unit 18 judges the final person searching result with respect to the person to be searched based on the obtained history information. As the judging of the person searching result based on the plurality of pieces of history information, for example, the following three processing methods can be applied.

First, the first processing method is a method of selecting one piece of history information from the plurality of pieces of history information based on predetermined conditions to obtain the searching result of the selected history information as the final person searching result.

In this first processing method, as described above in the processing example of the first search processing, the history information having the highest similarity degree, the newest history information or the oldest history information is selected from the plurality of pieces of history information. In the first processing method, the searching result of one selected piece of history information is regarded as the final person searching result. According to such first processing method, any complicated processing or any similarity degree judgment processing does not have to be performed, and the final person searching result is obtained by simple processing. Therefore, according to the first processing method, high-speed processing can be performed.

Next, the second processing method is a method in which the respective searching results in the plurality of pieces of history information are integrated, and the integrated searching result is obtained as the final person searching result. In this second processing method, various methods are applicable as the method of integrating the plurality of history information searching results into one searching result. There will be described later in detail an example of the integration processing as the second processing method.

Next, in the third processing method, the registrant is limited based on the respective searching results in the plurality of pieces of history information, the registered information is limited to that of the limited registrant, the searching person's face image is searched in the same manner as in the second search processing, and the final person searching result of the search processing is obtained.

In this third processing method, the registrant (registrant candidate) is specified as the person to be searched based on the respective searching results of the plurality of pieces of history information. For example, as to the registrant candidates, the predetermined number of registrants from an upper rank are regarded as the persons to be searched in the respective searching results. When the registrant candidate is specified, the second searching unit 18 judges the similarity degree between the face image of the person to be searched M and the face image in the registered information of each registrant candidate, and the searching result is obtained as the final person searching result based on the similarity degree. According to such third processing method, the similarity degree between the face image of the person to be searched M and the face image (registered image) of the registered information limited by the history information is calculated to thereby obtain the final person searching result. That is, according to the third processing method, the similarity degree may be judged with respect to the face image of the registrant as a strong candidate without judging the similarity degrees with respect to all of the registrants' face images. As a result, according to the third processing method, it is possible to improve the speed and efficiency of the whole person search processing while maintaining the high searching precision.

Next, there will be described integration processing to integrate a plurality of searching results into one searching result.

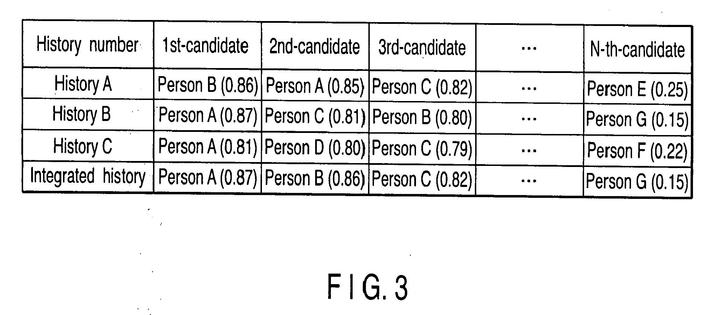

Here, there will be described one example of the integration processing in the second processing method. FIG. 3 is a diagram showing examples of three pieces of history information and an example of a general history obtained by integrating the pieces of history information.

In the example shown in FIG. 3, it is assumed that three pieces of history information A, B and C are obtained by the first search processing. Each history information searching result includes: the similarity degree with respect to the input image; and information indicating the predetermined number of registrants arranged in order from the highest similarity degree. In, for example, the history information A, in order from the highest similarity degree, there are held, as the searching result, a person B indicating a similarity degree of "0.86", a person A indicating a similarity degree of "0.85", a person C indicating a similarity degree of "0.82" ... In the history information B, in order from the highest similarity degree, there are held, as the searching result, the person A indicating a similarity degree of "0.87", the person C indicating a similarity degree of "0.81", the person B indicating a similarity degree of "0.80" ... In the history information C, in order from the highest similarity degree, there are held, as the searching result, the person A indicating a similarity degree of "0.81", the person D indicating a similarity degree of "0.80", the person C indicating a similarity degree of "0.79" ...

In such searching results of the history information, the maximum similarity degree is obtained every person.

For example, the maximum similarity degree of the person A is the similarity degree of "0.87" of the history information B. The maximum similarity degree of the person B is the similarity degree of "0.86" of the history information A. The maximum similarity degree of the person C is the similarity degree of "0.82" of the history information A. The searching result obtained by arranging the thus obtained maximum similarity degrees of the persons in order is general history information shown in FIG. 3. That is, in the above-described integration processing, the maximum similarity degrees of the persons are extracted from the searching results of the history information, and the maximum similarity degrees are arranged in descending order to obtain the searching result of the general history information.

It is to be noted that as the above integration processing, an average value of the similarity degrees of the persons in the history information is calculated, and the average values may be arranged in order, thereby obtaining the searching result of the general history information. In, for example, the history information A, B and C shown in FIG. 3, the average value of the similarity degrees of the person A is "0.843", the average value of the similarity degrees of the person B is "0.82" and the average value of the similarity degrees of the person C is "0.807". Therefore, as the searching result of the general history information obtained by arranging these values in order, there are obtained searching results indicating the person A (0.843), the person B (0.82) and the person C (0.807).

Moreover, in the third processing method, the registrants may be limited using the searching result of the general history information obtained by the above integration processing. This method may include, for example, limiting, as the registrant candidates, the predetermined number of persons from an upper rank of the searching result of the general history information; judging the similarity degree between the face image in the registered information of each registrant candidate and the face image of the person to be searched M; and obtaining the searching result based on these similarity degrees. In this case, the processing takes more time as compared with a case where the searching result of the general history information is obtained as such, as the final person searching result, but there is a merit that the correct similarity degree can be obtained.

Next, there will be described a flow of processing in the person searching device 1.

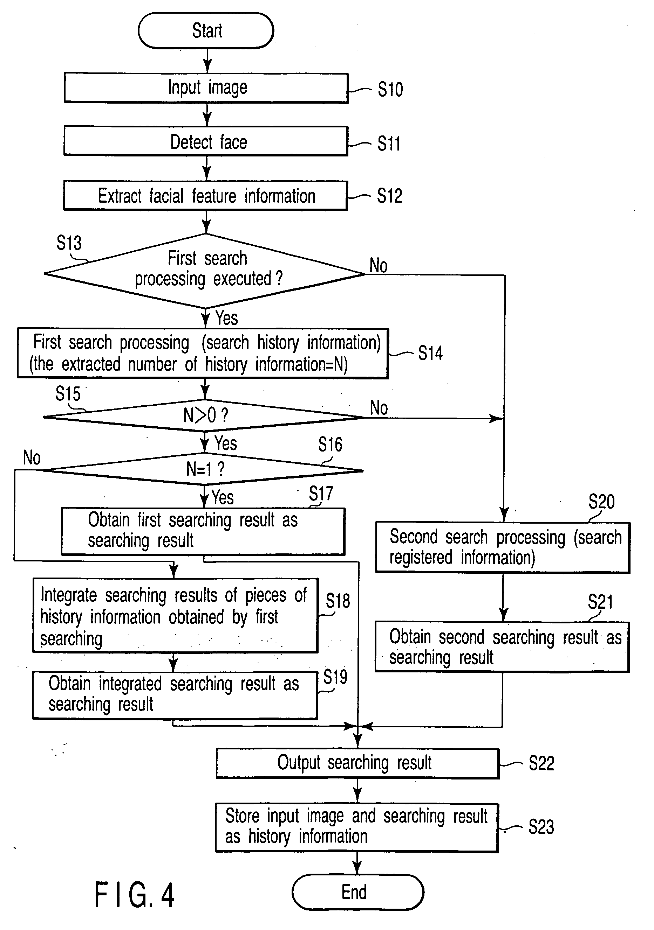

FIG. 4 is a flowchart showing a flow of basic processing in the person searching device 1.

When the person to be searched appears in front of the camera 10, the camera 10 photographs an image including the searching person's face. The image photographed by the camera 10 is taken into a main body of the person searching device 1 by the image input unit 11. When the image photographed by the camera 10 is taken, the image input unit 11 subjects the taken image to predetermined image processing (step S10). The image input unit 11 performs, for example, processing to convert an analog image photographed by the camera 10 into digital image data.

The image data processed by the image input unit 11 is supplied to the face detection unit 12. When the image data is supplied, the face detection unit 12 performs face detection processing with respect to the supplied image data (step S11). In the above face detection processing, as described above, there are performed processing to detect the face region from the image data, processing to extract a characteristic part of the face from the image of the face region and the like. A face detection processing result obtained by the face detection unit 12 is supplied to the facial feature extraction unit 13. The facial feature extraction unit 13 calculates facial feature information indicating facial features (step S12).

When the facial feature extraction unit 13 calculates the facial feature information, the main control unit 20 judges whether or not to execute the first search processing (step S13). This judgment is performed, for example, by comparison between the average value of the processing time required for the first search processing and the average value of the processing time required for the second search processing, based on the hit ratio in the first search processing or the like. It is to be noted that the judgment may be performed at any timing before the first search processing.

In a case where the above judgment judges that the first search processing be omitted (step S13, NO), the main control unit 20 omits the first search processing by the first searching unit 16, and executes a control so that the second search processing is executed by the second searching unit 18 in step S20 described later.

Moreover, in a case where the above judges that the first search processing be executed (step S13, YES), the main control unit 20 controls the first searching unit 16 to execute the first search processing. In this case, the above first searching unit 16 performs the above first search processing (step S14).

Here, it is assumed that the first search processing has extracted all pieces of history information indicating a similarity degree which is not less than the predetermined threshold value. Moreover, it is assumed that a N is the extracted number of history information indicating a similarity degree which is not less than the predetermined threshold value.

In a case where the first search processing judges that there exists the history information indicating the similarity degree which is not less than the predetermined threshold value with respect to the searching person's face image (step S15, YES, N>0), the first searching unit 16 notifies, as the first search processing result to the second searching unit 18, the information indicating the history information having the similarity degree which is not less than the predetermined threshold value. On receiving, as the first search processing result from the first searching unit 16, the information indicating the history information having the similarity degree which is not less than the predetermined threshold value, the second searching unit 18 judges whether or not only one piece of history information is extracted in the first search processing (step S16).

When this judgment judges that only one piece of history information has been extracted in the first search processing (step S16, Yes, N=1), the second searching unit 18 supplies, to the output unit 19, the history information searching result obtained as the first searching result as the person searching result (final person searching result of the person searching device 1) with respect to the searching person's face image (step S17).

When the judgment judges that a plurality of pieces of history information have been extracted in the first search processing (step S16, No, N>1), the second searching unit 18 performs integration processing (searching result integration processing) to integrate the history information searching results obtained as the first search processing results (step S18).

As described above, this searching result integration processing integrate the respective history information searching results to prepare one searching result (integrated searching result). When one searching result is prepared by such integration processing, the second searching unit 18 supplies, to the output unit 19, the integrated searching result as the person searching result with respect to the searching person's face image (final person searching result of the person searching device 1) (step S19).

Moreover, in a case where the first search processing judges that there does not exist the history information having the similarity degree which is not less than the predetermined threshold value with respect to the searching person's face image (step S15, ' NO, N=0), the first searching unit 16 notifies, as the first search processing result to the second searching unit 18, that there is not any history information similar to the searching person's face image.

On receiving the first search processing result indicating that there is not any history information similar to the searching person's face image, the second searching unit 18 regards, as objects, all pieces of registered information registered in the registration unit 17, and performs the second search processing to search for the registered information similar to the searching person's face image (facial feature information) (step S20).

In this second search processing, there are extracted the predetermined number of pieces of registered information in descending order of the similarity degrees with respect to the searching person's face image (facial feature information). In this case, the second searching unit 18 supplies, to the output unit 19, the second search processing result of the above step S20 as the person searching result (final person searching result of the person searching device 1) with respect to the searching person's face image (step S21).

On receiving the person searching result from the second searching unit 18, the output unit 19 outputs the searching result to the external device 2 (step S22). Accordingly, the external device 2 performs processing in accordance with the searching result output from the output unit 19.

When the external device 2 is, for example, a monitor device having a display unit, the external device 2 displays in the display unit the person's face image obtained as the searching result, attribute information or the like. When the external device 2 is a passing control device to control the opening and closing of the door, the external device 2 controls the passing of the person to be searched M based on the searching result.

Moreover, the second searching unit 18 stores, in the history management unit 15, the face image (or the facial feature information) of the person to be searched M, the person searching result, the attribute information and the like as the history information of the person search processing (step S23) In consequence, as the history information in the history management unit 15, there can be stored the person search processing result obtained by the face image of the person to be searched M.

Furthermore, in the history management unit 15, there may be stored the history information in which the result of the second search processing separately performed is obtained as the searching result. That is, in the above series of person search processing, the person searching result is obtained using the first search processing result. For example, in a case where the first search processing obtains only one piece of history information of the input image similar to face image of the person to be searched, the person searching result with respect to the searching person's face image is the history information searching result. In a case where the first search processing obtains a plurality of pieces of history information of the input image similar to face image of the person to be searched, the person searching result with respect to the searching person's face image is obtained by integrating the history information searching results.

That is, in a case where the above first search processing obtains the history information of the input image similar to the searching person's face image, there is not judged the similarity degree between the searching person's face image and the registered information face image. The history information searching result preferably indicates the correct similarity degree between the searching person's face image and each registered information face image. In this case, separately from the above flow of the series of processing, the similarity degree between the searching person's face image and the registered information face image may be judged, and the similarity degree may be stored as the history information searching result. Especially, when the person searching device 1 is on standby (i.e., when the processing of the steps S10 to S22 is not performed), the above processing (second search processing) can be performed with time without imposing any large processing burden on the person searching device 1 for a period of time.

There will be described a processing example in a case where processing is performed to search again for a face image of history information and a face image of registered information.

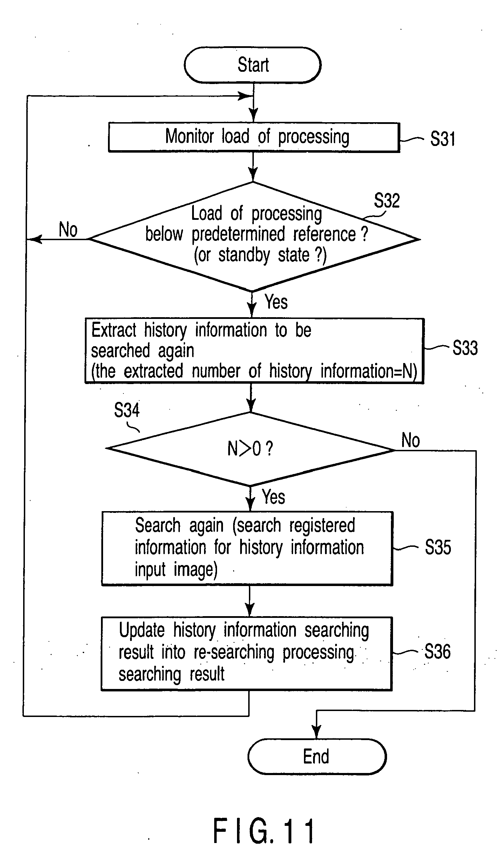

FIG. 11 is a flowchart showing a processing example in a case where processing is performed to search again for a face image of history information and a face image of registered information.

It is assumed that the processing shown in FIG. 11 is realized under the control of the main control unit 20. That is, the main control unit 20 monitors a load of processing (performing situation of various types of processing) of the person searching device 1 (step S31). Based on such monitoring result of the load of processing, the main control unit 20 judges whether or not the load of processing is below a predetermined reference (step S32). For example, in a case where the re-searching processing is performed in a standby state, the main control unit 20 judges whether or not the operating situation of the person searching device 1 has been brought into the standby state.

In a case where the load of processing of the person searching device 1 is below the predetermined reference (step S32, YES), the main control unit 20 extracts the history information to be searched again from the history information stored in the history management unit 15 (step S33). For example, the main control unit 20 extracts, as the history information to be searched again, the history information having the above first search processing result as the searching result. Here, it is assumed that a N is the extracted number of history information to be searched again from the history information stored in the history management unit 15.

When the history information to be searched again is extracted (step S34, YES, N>0), the above main control unit 20 searches again the extracted history information input image in the same manner as in the above second search processing (step S35). That is, the main control unit 20 calculates the similarity degree between the history information input image and each face image registered as the registered information in the registration unit, and the predetermined number of pieces of registered information in ascending order of the similarity degrees are obtained as the re-searching processing searching result.

When such re-searching processing searching result is obtained, the main control unit 20 updates the history information searching result into the re-searching processing searching result (step S36). It is to be noted that the above processing may be carried out by another person searching device.

As described above, the face image and the person searching result with respect to the face image are stored beforehand as the history information, in a case where the person search processing is executed in the above person searching device 1. When the searching person's face image is acquired, the person searching device 1 judges whether or not the searching person's face image and each history information face image are of the same person. In a case where there exists the history information of the face image judged to be of the same person as that of the searching person's face image, the person searching device 1 judges the person searching result with respect to the person to be searched based on the searching result of the history information of the face image judged to be of the same person as that of the searching person's face image.

In consequence, in the above person searching device 1, it is possible to improve the efficiency or the precision of the person searching result by use of the face image.

Next, there will be described a first modification of the person searching device 1.

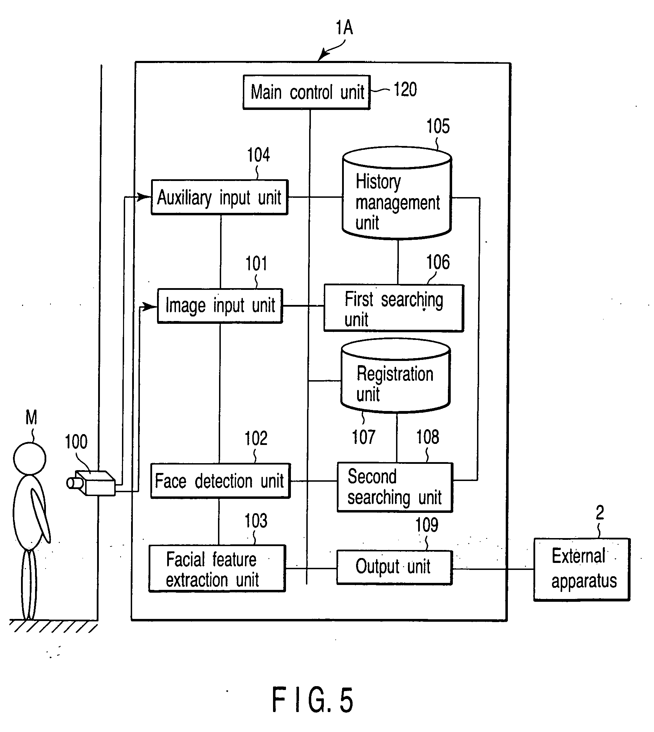

FIG. 5 is a block diagram showing a constitution example of a person searching device 1A in the first modification.

As shown in FIG. 5, the person searching device 1A is constituted of: a camera 100; an image input unit 101; a face detection unit 102; a facial feature extraction unit 103; an auxiliary input unit 104; a history management unit 105; an first searching unit 106; a registration unit 107; a second searching unit 108; an output unit 109; a main control unit 110 and the like.

The camera 100, the image input unit 101, the face detection unit 102, the facial feature extraction unit 103, the history management unit 105, the first searching unit 106, the registration unit 107, the second searching unit 108, the output unit 109 and the main control unit 110 have functions substantially similar to those of the camera 10, the image input unit 11, the face detection unit 12, the facial feature extraction unit 13, the history management unit 15, the first searching unit 16, the registration unit 17, the second searching unit 18, the output unit 19 and the main control unit 20, respectively. Therefore, in the first modification, there will be described in detail a component (added function or the like) which is different from that of the above person searching device 1.

The above auxiliary input unit 104 acquires auxiliary information from the person to be searched. The auxiliary information is different from that of a face image (or facial feature information obtained from the face image) detected from an image photographed by the camera 100. As the above auxiliary information, there is used information such as biometric information which is different from that of the face image (facial feature information) or attribute information designated by a person to be searched. Examples of the biometric information for use as the auxiliary information include height information of a person to be searched M, body weight information and information on a temperature distribution. Examples of the attribute information for use as the above auxiliary information include information on gender, age and identification number of the person to be searched M.

It is to be noted that in a case where biometric information such as the height information, the body weight information and the temperature distribution of the person to be searched M are used as the auxiliary information, the auxiliary input unit 104 is constituted of a sensor or the like for detecting biometric information such as the height information, the body weight information and the temperature distribution of the person to be searched M. In a case where the attribute information on the gender, age, identification number and the like of the person to be searched M are used as the above auxiliary information, the auxiliary input unit 104 is constituted of an operating section or the like for an operator or the person to be searched M to input the attribute information on the gender, age, identification number and the like of the person to be searched M. It is to be noted that the attribute information on the gender, age, identification number and the like of the person to be searched M may be acquired from a recording medium such as a card. In this case, the auxiliary input unit 104 is constituted of a device for acquiring the information from the recording medium.

Furthermore, as the auxiliary information, there may be used information on a characteristic (e.g., movement or the like) other than the face image, the information being obtained from the image photographed by the camera 100. In this case, the auxiliary input unit 104 does not have to be separately provided with a device for inputting the above auxiliary information. In this case, the auxiliary input unit 104 extracts the above auxiliary information from the image photographed by the camera 100. As the characteristic information other than the face image for use as the auxiliary information, there may be applied characteristic information obtained from a plurality of continuous images, such as the characteristic information indicating the movement of the person to be searched M.

Next, there will be described a case where the information indicating the movement of the person to be searched is used as the above auxiliary information.

In this case, a plurality of continuous images photographed by the camera 100 are supplied to the auxiliary input unit 104. The auxiliary input unit 104 obtains characteristic vectors from the plurality of continuous images, respectively. The above characteristic vector is obtained is obtained in the same manner as in the facial feature extraction unit 13. That is, the auxiliary input unit 104 cuts an m x n-pixel image from each image photographed by the camera 100, and obtains concentration difference information of the m x n-pixel image as an m x n-dimensional characteristic vector.

When the characteristic vector is obtained from each image, based on the characteristic vector, the auxiliary input unit 104 obtains a normal orthogonal vector by correlation matrix and KL expansion. Accordingly, the auxiliary input unit 104 calculates a subspace indicating face movement obtained from the continuous images. When k inherent vectors corresponding to inherent values are selected in descending order of the inherent values, this subspace is represented using a set of the inherent vectors.

Here, a correlation matrix Cd and an inherent vector $\Phi$d have a relation represented by Equation 1 as follows:

$$Cd = \Phi d\ \Lambda d\ \Phi d\ T \ ...\ (Equation\ 1),$$

wherein the inherent vector $\Phi$d is obtained. The inherent vector $\Phi$d is auxiliary information to be stored as history information. The inherent vector $\Phi$d is stored as a part of the history information on person search processing in the history management unit 105. The above auxiliary information may be registered as a part of registered information in the registration unit 107.

Next, there will be described a searching method using the auxiliary information obtained by the auxiliary input unit 104. Here, there will be described a method of matching the subspace indicating the face movement for use as the auxiliary information as described above.

The auxiliary input unit 104 acquires the subspace as information indicating the movement from a dynamic image (a plurality of continuous images) photographed by the camera 100 by the above method. Such subspace is stored, in the history management unit 15, as the history information of the person search processing in a case where the person search processing is performed as described above. Therefore, the first searching unit 106 can perform not only the searching of the above facial feature information but also the searching based on similarity between the subspaces (the subspace indicating the movement of the person to be searched M and the subspace included in the history information).

As a method of calculating the similarity between two subspaces, there may be applied a method such as a subspace method or a composite similarity degree method. In the present embodiment, it is assumed that a mutual subspace method is used which is disclosed in a document (Kenichi MAEDA and Sadakazu WATANABE: "A pattern matching method with local structure", Journal (D) of the Institute of Electronic Information and Communication Engineers, vol. J68-D, No. 3, pp. 345 to 352 (1985)).

In the above mutual subspace method, an "angle" formed by two subspaces is defines as the similarity degree. Here, a correlation matrix Cin and an inherent vector $\Phi$in have a relation represented by Equation 2 as follows:

$$Cin = \Phi in\ \Lambda in\ \Phi in\ T\ ...\ (Equation\ 2),$$

wherein the inherent vector $\Phi$in is obtained. The inherent vector $\Phi$in is information (input auxiliary information) indicating the movement of the person to be searched photographed by the camera 100. That is, in the search processing by the auxiliary information, there is obtained a similarity degree between two subspaces represented by the inherent vector Φin and the inherent vector Φd included in the history information, respectively. The similarity degree between the subspaces is given in a range of values "0.0 to 1.0". Based on such similarity degree between the subspaces, the first searching unit 106 can search the history information of the auxiliary information similar to the auxiliary information (movement of the person to be searched) obtained from the person to be searched.

According to the above first modification, together with the person search processing by the facial feature information of the person to be searched, there can be performed the person search processing by the auxiliary information as the characteristic information other than the facial feature information obtained from the person to be searched, and it is possible to improve a searching precision of the first search processing.

Next, there will be described a second modification of the person searching device 1.

In this second modification, there is considered a correlation between a plurality of persons constituting to be searched at the same time (e.g., between a plurality of persons forming a group of parent and child, husband and wife, friends or the like) in the above first search processing. That is, a person searching device of the second modification improves an efficiency of the search processing with respect to a plurality of persons photographed by the above camera at the same time or a plurality of persons continuously photographed by the camera. It can be expected that the efficiency of the processing can be improved in, for example, an operation mode in which the group of the plurality of persons who constantly act together (e.g., parent and child, husband and wife, friends or the like) is the person to be searched.

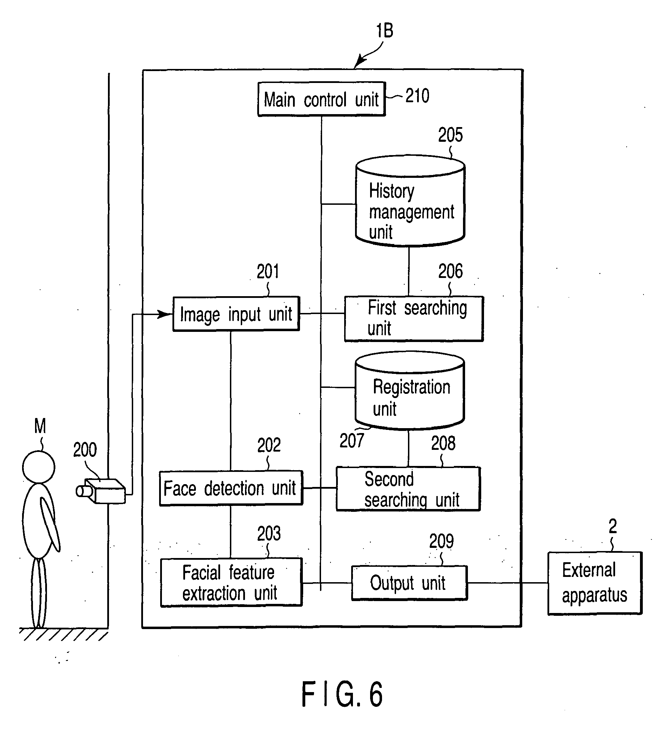

FIG. 6 is a block diagram showing a constitution example of a person searching device 1B in the second modification.

As shown in FIG. 6, the person searching device 1B is constituted of: a camera 200; an image input unit 201; a face detection unit 202; a facial feature extraction unit 203; a history management unit 205; an first searching unit 206; a registration unit 207; a second searching unit 208; an output unit 209; a main control unit 210 and the like.

The camera 200, the image input unit 201, the face detection unit 202, the facial feature extraction unit 203, the history management unit 205, the first searching unit 206, the registration unit 207, the second searching unit 208, the output unit 209 and the main control unit 210 have functions substantially similar to those of the camera 10, the image input unit 11, the face detection unit 12, the facial feature extraction unit 13, the history management unit 15, the first searching unit 16, the registration unit 17, the second searching unit 18, the output unit 19 and the main control unit 20, respectively. Therefore, in the second modification, there will be described in detail a component (added function or the like) which is different from that of the above person searching device 1.

The camera 200 may have a constitution similar to that of the camera 10. However, in the second modification, a plurality of persons may be photographed at the same time. Therefore, the camera 200 preferably has a constitution in which a wide-region image is photographed as in a general monitor camera or an image can be picked up at a wide angle.

Moreover, the history management unit 205 has a constitution substantially similar to that of the history management unit 15. That is, in the history management unit 205, in addition to input images, searching results and information such as attribute information shown in FIG. 2, there is stored, as a part of history information, correlation information indicating a correlation between a person having the searching result of a first candidate or an upper rank and the other person. In the correlation information, for example, persons photographed before and after, persons reflected in the same image and the like are stored as persons having high correlation.

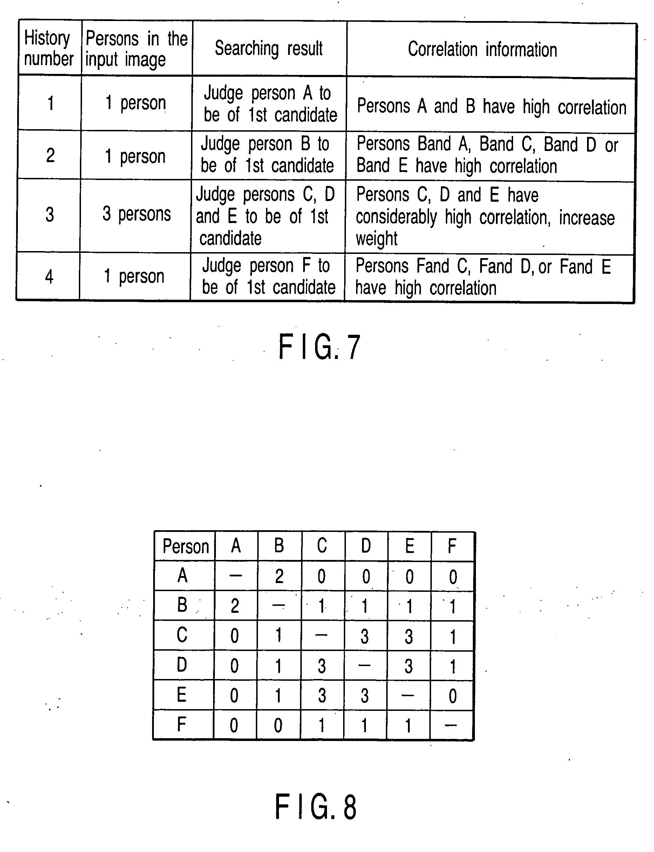

FIG. 7 is a diagram showing examples of history information to be stored in the history management unit 205.

In the example shown in FIG. 7, the history management unit 205 retains history information every image photographed by the camera 200. It is to be noted that each history information may be stored every person. In this case, the history information is stored as three pieces of history information on persons C, D and E, respectively.

Moreover, in the example shown in FIG. 7, the history information is constituted of a history number, the number of persons in the same screen, searching results, correlation information and the like. The history number is information for identifying each history information or information indicating history information in order of photographing (search processing order) in a time series. The number of the persons in the screen is information indicating the number of the persons present in one image photographed by the camera 200. The searching result is information indicating a registrant (registrant most similar to a person to be searched) of a face image having the highest similarity degree with respect to a detected face image. It is to be noted that, as shown in FIG. 2, the searching result may be information indicating the predetermined number of registrants in similarity-degree descending order with respect to the searching person's face image. The correlation information is information obtained in accordance with a predetermined rule.

Next, an example of the rule for preparing the correlation information will be described.

As the rule for preparing the correlation information, for example, the following rules are considered. Here, it is assumed that height of the correlation is indicated by a correlation value. For example, in the following description, it is assumed that the correlation values indicate "3" to "0" in correlation descending order.

- The correlation between the persons simultaneously photographed indicates a considerably high correlation value (e.g., the correlation value is set to "3").

- In a case where each person is continuously searched, a slightly high correlation value is set (e.g., the correlation value is set to "2").
- In a case where the group is continuously searched whereas one person is another person to be searched, a slightly low correlation is set (e.g., the correlation value is set to "1").
- In a case where a history interval elapses a predetermined time, any correlation value is not set, or a slightly small value is set (e.g., the correlation value is set to "0" or "1"). Alternatively, the correlation value is set in accordance with the elapsed time.

Next, there will be described an example of the correlation prepared in accordance with the above rule.

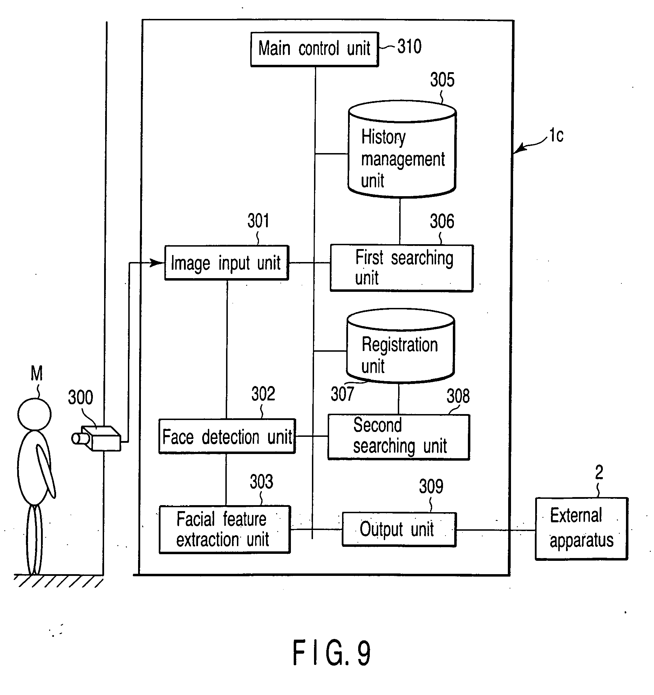

FIG. 8 is a diagram showing the correlation based on the history information 1 to 4 shown in FIG. 7. That is, when the above rule is applied to the history information 1 to 4 as shown in FIG. 7, the correlation is obtained as shown in FIG. 8. The history management unit 205 prepares information indicating the correlation shown in FIG. 8 based on the history information. That is, in the history management unit 105, information indicating the correlation is accumulated based on the history information of person search processing every time the person search processing is performed (e.g., the correlation values are successively added up). In consequence, the person searching device 1B can obtain information indicating the correlation having a high reliability as the person search processing is executed many times.

The first searching unit 206 can perform first search processing with reference to the above information indicating the correlation. For example, in a case where a searching person's face image is obtained, the first searching unit 206 judges whether or not there is another face image photographed simultaneously with the face image.

In a case where this judgment judges that there exists the other face image simultaneously photographed, the first searching unit 206 judges whether or not there is the face image in which the searching result is obtained. In a case where this judgment judges that there is the face image in which the searching result has been obtained among the face images photographed simultaneously with the above face image, the first searching unit 206 sets priority of history information as the person to be searched based on the correlation with respect to the person having the searching result indicating a similarity degree of the first candidate. That is, the first searching unit 206 preferentially regards, as the person to be searched, the history information of the person having the high correlation value with respect to the person photographed simultaneously with the searching person's face image. Accordingly, a person to be searched candidate is predicted based on the information indicating the correlation with respect to the person photographed simultaneously with the searching person's face image.

Moreover, in a case where there is not another face image simultaneously photographed, the first searching unit 206 judges history information on the immediately previous person search processing. Then, the first searching unit 206 sets the priority to the history information as the person to be searched based on the correlation with respect to the person indicating the history information searching result having a similarity degree of the first candidate. That is, the first searching unit 206 preferentially regards, as the person to be searched, the history information of the person having a high correlation value with respect to the person who has become the person to be searched just before the searching person's face image. Accordingly, the searching person candidate is predicted based on the information indicating the correlation with respect to the person who has become the person to be searched just before the searching person's face image.

It is to be noted that when the priority of the history information as the person to be searched is set, the searching order may be put forward with respect to the history information of the person having the high correlation value, or the person to be searched may be limited to the history information of the person having the high correlation value. By such method, it can be expected that the searching time be shortened.

For example, it is predicted that immediately after the person C is searched, there is a high possibility that the person D or E having a high correlation value with respect to the person C exists around in the information indicating the correlation as shown in FIG. 8. Therefore, if the priority of the person D or E is set to be high, the persons D and E can preferentially be searched for a while.

Moreover, even in the second search processing performed by the second searching unit 208, when the above information indicating the correlation is used, it is possible to set the priority to be high with respect to the registrant having a high correlation value and perform efficient processing. For example, the second searching unit 208 can limit the registrant as the person to be searched with the priority set based on the above information indicating the correlation, or change the searching order to search the object.

As described above, according to the second modification, the information indicating the correlation between the persons is prepared, and the priority can be set to the history information or the registered information candidate as the person to be searched based on the information indicating the correlation. Accordingly, it is possible to perform the search processing with a good efficiency at a high speed while inhibiting a precision drop. That is, according to the second modification, the continuously searched person, the simultaneously photographed persons or the like can be indicated based on the information indicating the correlation. The person having a high possibility that the person exists close to the person to be searched can be estimated based on the above information indicating the correlation.

Next, there will be described a third modification of the person searching device 1.

In this third modification, in a case where a searching person's face image has an abnormally high similarity degree in the above first search processing, it is judged to be an abnormality due to spoofing or the like, and a warning is given. That is, a person searching device of the third modification is applied especially to a system in which there are a comparatively large number of persons to be searched, and a precaution is strictly given against the spoofing or the like.

The device can be applied to, for example, a system in which a certain application is made using an applicant's facial portrait. In a case where it is stipulated that the portrait be photographed within certain months, when the portrait is quite the same even with an elapse of a certain period, it is possible to detect that there is a possibility that the portrait offends against the stipulation.

Moreover, in a case where there is a excessively high similarity degree with respect to the past history, there is a high possibility that the spoofing or the like is performed using an artificial material. Therefore, in such case, when it is notified that there is an abnormality without performing actual search processing, the abnormality can be judged at a high speed.

FIG. 9 is a block diagram showing a constitution example of a person searching device 1C in a third modification.

As shown in FIG. 9, the person searching device 1C is constituted of: a camera 300; an image input unit 301; a face detection unit 302; a facial feature extraction unit 303; a history management unit 305; an first searching unit 306; a registration unit 307; a second searching unit 308; an output unit 309; a main control unit 310 and the like.

The camera 300, the image input unit 301, the face detection unit 302, the facial feature extraction unit 303, the history management unit 305, the first searching unit 306, the registration unit 307, the second searching unit 308, the output unit 309 and the main control unit 310 have functions substantially similar to those of the camera 10, the image input unit 11, the face detection unit 12, the facial feature extraction unit 13, the history management unit 15, the first searching unit 16, the registration unit 17, the second searching unit 18, the output unit 19 and the main control unit 20, respectively. Therefore, in the third modification, there will be described in detail a component (added function or the like) which is different from that of the above person searching device 1.

In the history management unit 305, as shown in, for example, FIG. 2, there is stored history information including a face image (input image) which has become a person to be searched. The history information includes attribute information such as a searching date. Accordingly, in the history information, a person who has input an image to perform searching, and a type of the image are seen.

As the above first search processing, the first searching unit 306 obtains a similarity degree of a searching person's face image (facial feature information obtained from the facial feature extraction unit 303) with respect to each history information input image (facial feature information in the input image) stored in the history management unit 305. Usually, the human face does not have the same state. Therefore, the face image of even the same person does not indicate an abnormally high value of the similarity degree with respect to the face image photographed in another timing. However, in the facial portrait or the like, the human face does not change. Therefore, the same facial portrait indicates an excessively high similarity degree. In other words, the similarity degree between the face images of the actual human face photographed in different timings usually indicates a value in an appropriate range. This range can be defined to be not less than a threshold value (first threshold value) for judging that the images are similar (seem to be of the same person) and to be less than an excessively high threshold value (second threshold value).

Therefore, the first searching unit 306 can judge whether or not the similarity degree between the searching person's face image and the history information input image is not less than the second threshold value to thereby judge whether or not the searching result is abnormal. Here, the abnormal searching result indicates that it is judged that there is a high possibility that the artificial material or the like has been input substantially without any change.

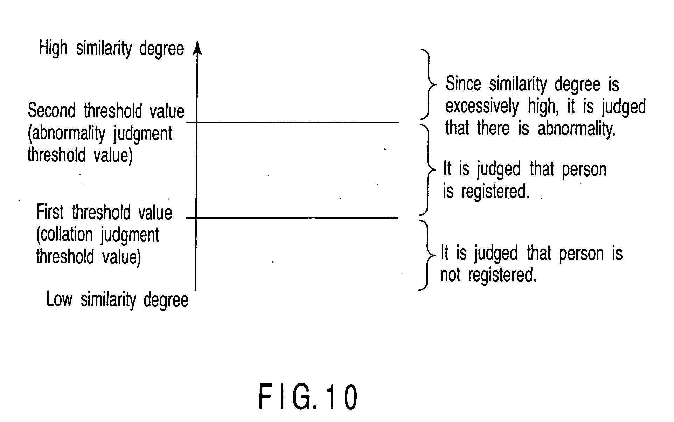

For example, FIG. 10 is a diagram showing a searching example of the first and second threshold values.

In a case where the threshold value is set as shown in FIG. 10, the first searching unit 306 judges that the searching result is abnormal in a case where the similarity degree is not less than the second threshold value (abnormality judgment threshold value). In a case where the similarity degree is not less than the first threshold value (collation judgment threshold value) and is less than the second threshold value (abnormality judgment threshold value), the first searching unit 306 judges that the person to be searched is the same person as the person of the history information. When the similarity degree is less than the first threshold value (collation judgment threshold value), the first searching unit 306 judges that the person to be searched is the same person as the person of the history information.

Furthermore, in the history information, a searching date is indicated as attribute information. That is, the first searching unit 306 can judge a time elapsed from each history information based on the searching date in the history information and the present date. Accordingly, the first searching unit 306 can judge whether or not the result is abnormal based on the elapsed time and the above abnormality judgment threshold value. That is, even in a case where a predetermined period or more elapses, when the similarity degree is not less than the abnormality judgment threshold value, the first searching unit 306 can judge that the searching result is abnormal. For example, a facial portrait for use in an application form or the like, there is usually a reference that several months or less elapse after photographing. With respect to such reference, the first searching unit 306 can judge that there is a high possibility that the same portrait is used, in a case where an abnormality high similarity degree is indicated even with an elapse of a defined period.

As described above, the first searching unit 306 can judge whether or not the searching person's face image is abnormal before the second search processing to be performed by the second searching unit 308. In a case where such abnormality is judged, the first searching unit 306 quickly notifies the output unit 309 that the searching result is abnormal. Accordingly, the output unit can sound an alarm by the external device 2 to notify a manager at a time when the first search processing judges that there is a high possibility that the same portrait is used or spoofing or the like by an artificial material is performed.

As described above, according to the third modification. in a case where the similarity degree between the searching person's face image and the history information input image indicates an abnormally high value, it can be judged that the searching result is abnormal, and it is possible to prevent the spoofing by the facial portrait or the artificial material. Furthermore, according to the third modification, in a case where the similarity degree indicates an abnormally high value even with an elapse of a predetermined time based on the searching date of the history information, it can be judged that the searching result is abnormal, and it is possible to prevent the same portrait from being used many times.

### Claims

1. A person searching device (1, 1A, 1B, 1C) **characterized by** comprising:

   a registration unit (17, 107, 207, 307) in which biometric information of a plurality of persons is stored beforehand;
   a biometric information obtain unit (11, 12, 13, 101, 102, 103, 201, 202, 203, 301, 302, 303) which acquires the biometric information of a person to be searched;
   a history storage unit (15, 105, 205, 305) which associates the biometric information acquired by the biometric information obtain unit with a person searching result based on the biometric information to store the associated information;
   a first searching unit (16, 106, 206, 306) which searches the history storage unit for biometric information similar to the biometric information acquired by the biometric information obtain unit;
   a second searching unit (18, 108, 208, 308) to search for the biometric information which is similar to the biometric information acquired by the biometric information obtain unit and which is stored in the registration unit, by use of a first searching result obtained by the first searching unit; and
   an output unit (19, 109, 209, 309) which outputs a second searching result obtained by the second searching unit as the person searching result with respect to the person to be searched.

2. The person searching device (1, 1A, 1B, 1C) according to claim 1, **characterized in that** the history storage unit (15, 105, 205, 305) further associates the second searching result obtained by the second searching unit (18, 108, 208, 308) with the biometric information acquired by the biometric information obtain unit (11, 12, 13, 101, 102, 103, 201, 202, 203, 301, 302, 303) to store the associated information.

3. The person searching device (1, 1A, 1B, 1C) according to claim 1, **characterized in that** the biometric information obtain unit (11, 12, 13, 101, 102, 103, 201, 202, 203, 301, 302, 303) includes:

   an image acquiring section (11, 101, 201, 301) which acquires an image including the biometric information of the object;
   a biometric information detecting section (12, 102, 202, 302) which detects the biometric information from the image acquired by the image acquiring section; and
   a characteristic extracting section (13, 103, 203, 303) which extracts characteristic information of the biometric information from the biometric information detected by the biometric information detecting section,
   the history storage unit (15, 105, 205, 305) stores the characteristic information of the biometric information as the biometric information,
   the first searching unit (16, 106, 206, 306) searches for characteristic information of the biometric information, which is similar to the characteristic information of the biometric information extracted by the characteristic extracting section and which is stored in the history storage unit,
   the registration unit (17, 107, 207, 307) stores the characteristic information of the biometric information as the biometric information, and
   the second searching unit (18, 108, 208, 308) searches for the characteristic information of the biometric information which is similar to the characteristic information of the biometric information extracted by the characteristic extracting section and which is stored in the registration unit.

4. The person searching device (1, 1A, 1B, 1C) according to claim 1, **characterized in that** the biometric information is a person's face image.

5. The person searching device (1, 1A, 1B, 1C) according to claim 1, **characterized in that** the first searching unit (16, 106, 206, 306) judges a similarity degree between the biometric information acquired by the biometric information obtain unit (11, 12, 13, 101, 102, 103, 201, 202, 203, 301, 302, 303) and each biometric information stored in the history storage unit (15, 105, 205, 305), and obtains, as the first searching result, the biometric information indicating the similarity degree which is not less than a predetermined threshold value with respect to the biometric information acquired by the biometric information obtain unit, and stored in the history storage unit (15, 105, 205, 305).

6. The person searching device (1, 1A, 1B, 1C) according to claim 5, **characterized in that** the first searching unit (16, 106, 206, 306) searches the history storage unit (15, 105, 205, 305) for the biometric information indicating the similarity degree which is not less than the predetermined threshold value with respect to the biometric information acquired by the biometric information obtain unit (11, 12, 13, 101, 102, 103, 201, 202, 203, 301, 302, 303), and obtains, as the first searching result, the biometric information selected from the searched biometric information based on a predetermined condition.

7. The person searching device (1, 1A, 1B, 1C) according to claim 5, **characterized in that** the first searching unit (16, 106, 206, 306) searches the history storage unit (15, 105, 205, 305) for the biometric information indicating the similarity degree which is not less than the predetermined threshold value with respect to the biometric information acquired by the biometric information obtain unit (11, 12, 13, 101, 102, 103, 201, 202, 203, 301, 302, 303), and obtains all of the searched biometric information as the first searching result.

8. The person searching device (1, 1A, 1B, 1C) according to claim 5, **characterized in that** the first searching unit (16, 106, 206, 306) searches the history storage unit (15, 105, 205, 305) for the biometric information indicating the similarity degree which is not less than the predetermined threshold value with respect to the biometric information acquired by the biometric information obtain unit (11, 12, 13, 101, 102, 103, 201, 202, 203, 301, 302, 303), and obtains, as the first searching result, the biometric information having the highest similarity degree among the searched biometric information.

9. The person searching device (1, 1A, 1B, 1C) according to claim 5, **characterized in that** the first searching unit (16, 106, 206, 306) searches the history storage unit (15, 105, 205, 305) for the biometric information indicating the similarity degree which is not less than the predetermined threshold value with respect to the biometric information acquired by the biometric information obtain unit (11, 12, 13, 101, 102, 103, 201, 202, 203, 301, 302, 303), and obtains, as the first searching result, the biometric information having the latest searching date among the searched biometric information.

10. The person searching device (1, 1A, 1B, 1C) according to claim 5, **characterized in that** the first searching unit (16, 106, 206, 306) searches the history storage unit (15, 105, 205, 305) for the biometric information indicating the similarity degree which is not less than the predetermined threshold value with respect to the biometric information acquired by the biometric information obtain unit (11, 12, 13, 101, 102, 103, 201, 202, 203, 301, 302, 303), and obtains, as the first searching result, the biometric information having the oldest searching date among the searched biometric information.

11. The person searching device (1, 1A, 1B, 1C) according to claim 1, **characterized in that** the second searching unit (18, 108, 208, 308) searches the registration unit (17, 107, 207, 307) for the biometric information similar to the biometric information acquired by the biometric information obtain unit (11, 12, 13, 101, 102, 103, 201, 202, 203, 301, 302, 303), in a case where there does not exist, in the history storage unit (15, 105, 205, 305), the biometric information similar to the biometric information acquired by the biometric information obtain unit (11, 12, 13, 101, 102, 103, 201, 202, 203, 301, 302, 303) as the first searching result obtained by the first searching unit (16, 106, 206, 306).

12. The person searching device (1, 1A, 1B, 1C) according to claim 11, **characterized in that** the second searching unit (18, 108, 208, 308) judges the similarity degree between the biometric information acquired by the biometric information obtain unit (11, 12, 13, 101, 102, 103, 201, 202, 203, 301, 302, 303) and each biometric information stored in the registration unit (17, 107, 207, 307), and obtains, as the second searching result, the biometric information indicating the similarity degree which is not less than the predetermined threshold value with respect to the biometric information acquired by the biometric information obtain unit (11, 12, 13, 101, 102, 103, 201, 202, 203, 301, 302, 303) and stored in the registration unit (17, 107, 207, 307).

13. The person searching device (1, 1A, 1B, 1C) according to claim 1, **characterized in that** the second searching unit (18, 108, 208, 308) obtains, as the second searching result, the person searching result corresponding to the biometric information stored in the history storage unit (15, 105, 205, 305) and judged to be similar to the biometric information acquired by the biometric information obtain unit(11, 12, 13, 101, 102, 103, 201, 202, 203, 301, 302, 303) as the first searching result obtained by the first searching unit, in a case where there exists, in the history storage unit (15, 105, 205, 305), one piece of biometric information similar to the biometric information acquired by the biometric information obtain unit as the first searching result obtained by the first searching unit (16, 106, 206, 306).

14. The person searching device (1, 1A, 1B, 1C) according to claim 1, **characterized in that** the second searching unit (18, 108, 208, 308) judges the second searching result with respect to the person to be searched based on a plurality of person searching results corresponding to a plurality of pieces of biometric information stored in the history storage unit and judged to be similar to the biometric information acquired by the biometric information obtain unit (11, 12, 13, 101, 102, 103, 201, 202, 203, 301, 302, 303) as the first searching result obtained by the first searching unit (16, 106, 206, 306), in a case where there exist, in the history storage unit (15, 105, 205, 305), a plurality of pieces of biometric information similar to the biometric information acquired by the biometric information obtain unit (11, 12, 13, 101, 102, 103, 201, 202, 203, 301, 302, 303) as the first searching result obtained by the first searching unit (16, 106, 206, 306).

15. The person searching device (1, 1A, 1B, 1C) according to claim 1, **characterized in that** the second searching unit (18, 108, 208, 308) prepares one searching result obtained by integrating a plurality of person searching results corresponding to a plurality of pieces of biometric information stored in the history storage unit (15, 105, 205, 305) and judged to be similar to the biometric information acquired by the biometric information obtain unit (11, 12, 13, 101, 102, 103, 201, 202, 203, 301, 302, 303) as the first searching result obtained by the first searching unit (16, 106, 206, 306), and obtains the prepared searching result as the second searching result corresponding to the biometric information, in a case where there exist, in the history storage unit (15, 105, 205, 305), a plurality of pieces of biometric information similar to the biometric information acquired by the biometric information obtain unit (11, 12, 13, 101, 102, 103, 201, 202, 203, 301, 302, 303) as the first searching result obtained by the first searching unit (16, 106, 206, 306).

16. The person searching device (1, 1A, 1B, 1C) according to claim 1, **characterized in that** the second searching unit (18, 108, 208, 308) limits the biometric information stored in the registration unit (17, 107, 207, 307) based on a plurality of person searching results corresponding to a plurality of pieces of biometric information stored in the history storage unit (15, 105, 205, 305) and judged to be similar to the biometric information acquired by the biometric information obtain unit (11, 12, 13, 101, 102, 103, 201, 202, 203, 301, 302, 303) as the first searching result obtained by the first searching unit (16, 106, 206, 306), and searches the limited biometric information for the biometric information similar to the biometric information acquired by the biometric information obtain unit (11, 12, 13, 101, 102, 103, 201, 202, 203, 301, 302, 303), in a case where there exist, in the history storage unit (15, 105, 205, 305), a plurality of pieces of biometric information similar to the biometric information acquired by the biometric information obtain unit (11, 12, 13, 101, 102, 103, 201, 202, 203, 301, 302, 303) as the first searching result obtained by the first searching unit (16, 106, 206, 306).

17. The person searching device (1, 1A, 1B, 1C) according to claim 1, **characterized by** further comprising:

a control unit (20, 110, 210, 310) which predicts a processing time in a case where the first searching unit (16, 106, 206, 306) executes the search processing and which switches whether to execute or omit the search processing by the first searching unit (16, 106, 206, 306) based on the prediction.

18. The person searching device (1, 1A, 1B, 1C) according to claim 2, **characterized by** further comprising:

a re-searching unit (S35, 20, 110, 210, 310) to search for the biometric information which is similar to the biometric information stored in the history storage unit (15, 105, 205, 305) and which is stored in the registration unit (17, 107, 207, 307); and
an update unit (S36, 20, 110, 210, 310) which updates the searching result corresponding to the biometric information stored in the history storage unit (15, 105, 205, 305) based on a searching result obtained by the re-searching unit (S35, 20, 110, 210, 310) .

**19.** The person searching device (1, 1A, 1B, 1C) according to claim 18, **characterized in that** the re-searching unit (S35, 20, 110, 210, 310) searches for biometric information which is similar to the biometric information stored in the history storage unit (15, 105, 205, 305) and which is stored in the registration unit (17, 107, 207, 307), in a case where a load of processing of the person searching device (1, 1A, 1B, 1C) is below a predetermined reference.

**20.** The person searching device (1, 1A, 1B, 1C) according to claim 2, **characterized by** further comprising:

an auxiliary information input unit (104) to acquire auxiliary information which is different from the biometric information on a person having the biometric information acquired by the biometric information obtain unit (11, 12, 13, 101, 102, 103, 201, 202, 203, 301, 302, 303), the history storage unit (15, 105, 205, 305) further associating the auxiliary information with the biometric information acquired by the biometric information obtain unit (11, 12, 13, 101, 102, 103, 201, 202, 203, 301, 302, 303) to store the associated information.

**21.** The person searching device (1, 1A, 1B, 1C) according to claim 20, **characterized in that** the auxiliary information is attribute information on a person having the biometric information acquired by the biometric information obtain unit (11, 12, 13, 101, 102, 103, 201, 202, 203, 301, 302, 303) or information indicating an operation.

**22.** The person searching device (1, 1A, 1B, 1C) according to claim 1, **characterized in that** the history storage unit (15, 105, 205, 305) further stores information indicating a correlation between each person and the other person, and the first searching unit (16, 106, 206, 306) searches for history information of the biometric information similar to the biometric information acquired by the biometric information obtain unit (11, 12, 13, 101, 102, 103, 201, 202, 203, 301, 302, 303) in accordance with a priority based on the information indicating the correlation.

**23.** The person searching device (1, 1A, 1B, 1C) according to claim 5, **characterized in that** the first searching unit (16, 106, 206, 306) judges the similarity degree between the biometric information acquired by the biometric information obtain unit (11, 12, 13, 101, 102, 103, 201, 202, 203, 301, 302, 303) and each biometric information stored in the history storage unit (15, 105, 205, 305), obtains, as first the searching result, the biometric information indicating the similarity degree which is not less than a first threshold value and is less than a second threshold value larger than the first threshold value with respect to the biometric information acquired by the biometric information obtain unit (11, 12, 13, 101, 102, 103, 201, 202, 203, 301, 302, 303), and stored in the history storage unit (15, 105, 205, 305), and judges that the biometric information acquired by the biometric information obtain unit (11, 12, 13, 101, 102, 103, 201, 202, 203, 301, 302, 303) is abnormal, in a case where the similarity degree with respect to the biometric information acquired by the biometric information obtain unit (11, 12, 13, 101, 102, 103, 201, 202, 203, 301, 302, 303) is not less than the second threshold value.

**24.** The person searching device (1, 1A, 1B, 1C) according to claim 23, **characterized in that** the first searching unit (16, 106, 206, 306) judges that the biometric information acquired by the biometric information obtain unit (11, 12, 13, 101, 102, 103, 201, 202, 203, 301, 302, 303) is abnormal, in a case where the similarity degree is not less than the second threshold value, and a time elapsed from the history information indicating the similarity degree which is not less than the second threshold value is a predetermined time or more.

**25.** A person searching method **characterized by** comprising:

storing (17, 107, 207, 307) biometric information of a plurality of persons beforehand in a registration unit (17, 107, 207, 307);
obtaining (S10, S11, S12) the biometric information of a person to be searched;
associating (S23, 15, 105, 205, 305) the acquired biometric information with a person searching result based on the biometric information to store the associated information in a history storage unit (15, 105, 205, 305);
searching (S14) the history storage unit (15, 105, 205, 305) for biometric information similar to the biometric information acquired from the person to be searched;
searching (S17, S18, S20) for the biometric information which is similar to the acquired biometric information and which is stored in the registration unit (17, 107, 207, 307), by use of a first searching result from the history storage unit (15, 105, 205, 305); and
outputting (S22) a second searching result from the registration unit (17, 107, 207, 307) as the person searching result with respect to the person to be searched.

26. An access control system **characterized by** comprising:

a registration unit (17, 107, 207, 307) in which there is stored beforehand biometric information of a plurality of persons permitted to access;

a biometric information obtain unit (11, 12, 13, 101, 102, 103, 201, 202, 203, 301, 302, 303) which acquires the biometric information of a person to be searched;

a history storage unit (15, 105, 205, 305) which associates the biometric information acquired by the biometric information obtain unit with a person searching result based on the biometric information to store the associated information;

a first searching unit (16, 106, 206, 306) which searches the history storage unit for biometric information similar to the biometric information acquired by the biometric information obtain unit;

a second searching unit (18, 108, 208, 308) to search for the biometric information which is similar to the biometric information acquired by the biometric information obtain unit and which is stored in the registration unit, by use of a first searching result obtained by the first searching unit;

an output unit (19, 109, 209, 309) which outputs a second searching result obtained by the second searching unit as the person searching result with respect to the person to be searched; and

an external device (2) which controls access of the person to be searched based on the person searching result output from the output unit.

**FIG. 1**

EP 1 727 074 A2

15

| | Past input image | Past searching result | | | | | | | Attribute information |
|---|---|---|---|---|---|---|---|---|---|
| A | Input image A | 1st candidate | 2nd candidate | 3rd candidate | 4th candidate | 5th candidate | 6th candidate | ... | |
| B | Input image B | 1st candidate | 2nd candidate | 3rd candidate | 4th candidate | 5th candidate | 6th candidate | ... | |
| C | Input image C | 1st candidate | 2nd candidate | 3rd candidate | 4th candidate | 5th candidate | 6th candidate | ... | |

FIG. 2

| History number | 1st-candidate | 2nd-candidate | 3rd-candidate | ... | N-th-candidate |
|---|---|---|---|---|---|
| History A | Person B (0.86) | Person A (0.85) | Person C (0.82) | ... | Person E (0.25) |
| History B | Person A (0.87) | Person C (0.81) | Person B (0.80) | ... | Person G (0.15) |
| History C | Person A (0.81) | Person D (0.80) | Person C (0.79) | ... | Person F (0.22) |
| Integrated history | Person A (0.87) | Person B (0.86) | Person C (0.82) | ... | Person G (0.15) |

FIG. 3

EP 1 727 074 A2

**FIG. 4**

Start

Input image — S10

Detect face — S11

Extract facial feature information — S12

S13 — First search processing executed ? — No

Yes

First search processing (search history information) (the extracted number of history information=N) — S14

S15 — N>0 ? — No

Yes

N=1 ? — S16

No / Yes — S17

Obtain first searching result as searching result

Second search processing (search registered information) — S20

Integrate searching results of pieces of history information obtained by first searching — S18

Obtain second searching result as searching result — S21

Obtain integrated searching result as searching result — S19

Output searching result — S22

Store input image and searching result as history information — S23

End

FIG. 5

1B

Main control unit — 210

205

History management unit

201

Image input unit

206

First searching unit

Registration unit

207    208

202

Face detection unit

Second searching unit

203    209    2

Facial feature extraction unit

Output unit

External apparatus

M

200

FIG. 6

| History number | Persons in the input image | Searching result | Correlation information |
|---|---|---|---|
| 1 | 1 person | Judge person A to be of 1st candidate | Persons A and B have high correlation |
| 2 | 1 person | Judge person B to be of 1st candidate | Persons Band A, Band C, Band D or Band E have high correlation |
| 3 | 3 persons | Judge persons C, D and E to be of 1st candidate | Persons C, D and E have considerably high correlation, increase weight |
| 4 | 1 person | Judge person F to be of 1st candidate | Persons Fand C, Fand D, or Fand E have high correlation |

## FIG. 7

| Person | A | B | C | D | E | F |
|---|---|---|---|---|---|---|
| A | — | 2 | 0 | 0 | 0 | 0 |
| B | 2 | — | 1 | 1 | 1 | 1 |
| C | 0 | 1 | — | 3 | 3 | 1 |
| D | 0 | 1 | 3 | — | 3 | 1 |
| E | 0 | 1 | 3 | 3 | — | 0 |
| F | 0 | 0 | 1 | 1 | 1 | — |

## FIG. 8

FIG. 9

High similarity degree

Second threshold value
(abnormality judgment
threshold value)

First threshold value
(collation judgment
threshold value)

Low similarity degree

Since similarity degree is
excessively high, it is judged
that there is abnormality.

It is judged that person
is registered.

It is judged that person is
not registered.

FIG.10

Start

Monitor load of processing — S31

Load of processing below predetermined reference ? (or standby state ?) — S32

No

Yes

Extract history information to be searched again (the extracted number of history information=N) — S33

S34

N>0 ?

No

Yes

Search again (search registered information for history information input image) — S35

Update history information searching result into re-searching processing searching result — S36

End

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002163652 A

- JP 2003256380 A

### Non-patent literature cited in the description

- **KAZUHIRO FUKUI ; OSAMU YAMAGUCHI.** Facial feature point extraction method based on combination of shape extraction and pattern matching. *Journal (D) of the Institute of Electronic Information and Communication Engineers,* 1997, vol. J80-D-II (8), 2170-2177

- **MAYUMI YUASA ; ROUKO NAKASHIMA.** Digital Make-up System based on precise facial feature point detection. *10th Image Sensing Symposium Digests,* 2004, 219-224
- **KENICHI MAEDA ; SADAKAZU WATANABE.** A pattern matching method with local structure. *Journal (D) of the Institute of Electronic Information and Communication Engineers,* 1985, vol. J68-D (3), 345-352